# FASCICULE DE BREVET EUROPEEN

(11) **EP 0 842 399 B1**
(45) Date de publication et mention de la délivrance du brevet: **07.11.2001**
(21) Numéro de dépôt: 96927124.6
(22) Date de dépôt: 01.08.1996
(51) Int. Cl.: G01F 1/66

(54) **COMPTEUR DE FLUIDE A ULTRASONS POUR L'ATTENUATION D'ONDES ULTRASONORES PARASITES**
ULTRASCHALLFLUIDZÄHLER ZUR DÄMPFUNG VON PARASITÄREN ULTRASCHALLWELLEN
FLUID METER OF THE ULTRASONIC TYPE FOR ATTENUATION OF PARASITIC ULTRASONIC WAVES

(30) Priorité: 04.08.1995 FR 9509600
(43) Date de publication de la demande: 20.05.1998
(73) Titulaire: SCHLUMBERGER INDUSTRIES S.A., 92120 Montrouge (FR)
(72) Inventeur: LIGNEUL, Patrice, F-92370 Chaville (FR); HOCQUET, Philippe, F-92170 Vanves (FR); FROELICH, Benoît, F-78160 Marly-le-Roi (FR)
(74) Mandataire: Petit, Maxime
(86) Numéro de dépôt international: FR9601220
(87) Numéro de publication internationale: WO9706415

(56) Documents cités:
- EP-A- 0 048 791
- EP-A- 0 088 235
- EP-A- 0 249 689
- WO-A-86/02723
- WO-A-94/20821
- FR-A- 2 357 869

## Description

L'invention est relative à un compteur de fluide à ultrasons comprenant des transducteurs ultrasonores définissant entre eux un trajet de mesure ultrasonore et émettant et recevant des ondes ultrasonores dans le fluide le long dudit trajet de mesure suivant au moins une fréquence ultrasonore.

Il est connu depuis de nombreuses années de mesurer la vitesse d'un fluide en écoulement en émettant à partir de transducteurs ultrasonores des ondes ultrasonores dans le fluide dans le sens d'écoulement dudit fluide et en sens opposé et en mesurant les temps de propagation respectifs des ondes émises dans les deux sens.

A partir de la mesure de la vitesse du fluide, on détermine aisément son débit ainsi que le volume de fluide qui s'est écoulé au bout d'un temps donné. Les compteurs de fluide à ultrasons, lorsqu'ils sont installés sur site, peuvent être placés à côté d'un régulateur de pression.

Des régulateurs de pression peuvent, par exemple, réduire la pression d'un gaz de plusieurs bars à environ 20mbars en amont de compteurs de gaz à ultrasons.

Or, la chute de pression dans le régulateur est une source de bruit considérable et l'on a pu constater qu'une telle chute de pression peut donner naissance à des ondes ultrasonores parasites ayant une grande amplitude de pression et dont la (ou les ) fréquence(s) correspond(ent) à celle(s) des transducteurs ultrasonores du compteur.

Ces ondes ultrasonores parasites sont transmises par l'écoulement du fluide jusqu'aux transducteurs ultrasonores. Il en résulte des erreurs de mesure considérables et tout à fait inacceptables.

Une solution logique consisterait à augmenter l'amplitude des ondes ultrasonores émises par les transducteurs à condition que le niveau du bruit généré par le régulateur ne soit pas trop élevé.

Toutefois, l'augmentation de l'amplitude est technologiquement limitée.

Une autre solution consisterait à augmenter la fréquence d'émission des transducteurs ultrasonores mais cela conduirait à accroître la consommation énergétique du compteur, ce qui représente un inconvénient lors d'un fonctionnement sur piles.

En outre, on ne peut augmenter la fréquence d'émission des transducteurs que dans certaines limites au delà desquelles, il ne reste plus qu'à remplacer les transducteurs par des transducteurs de fréquence plus élevée. Cependant de tels transducteurs représentent un changement de technologie par rapport aux anciens transducteurs ce qui risque parfois de remettre en cause le trajet de mesure ultrasonore ainsi que l'électronique associée audit compteur.

La présente invention vise à remédier au problème exposé ci-dessus en proposant un compteur de fluide à ultrasons :
selon la revendication 1.

De façon générale, dans le présent exposé, on entend par "atténuation", l'atténuation à la (ou aux) fréquence(s) utilisée(s) dans le compteur pour la mesure ultrasonore des ondes ultrasonores parasites.

Ainsi en atténuant l'amplitude des ondes ultrasonores parasites dans une chambre interne au compteur, on dispose d'un moyen simple et efficace pour éviter que de telles ondes parasites perturbent les transducteurs ultrasonores.

Selon une caractéristique de l'invention, les moyens d'atténuation des ondes ultrasonores parasites sont agencés dans la chambre de manière à offrir auxdites ondes de multiples réflexions sur le matériau absorbant.

Selon un mode de réalisation de l'invention, les moyens d'atténuation possèdent des parois réalisées dans un matériau absorbant les ondes ultrasonores. Les parois des moyens d'atténuation peuvent être déformées vers l'intérieur desdits moyens de manière à faire office d'écran entre l'entrée et la sortie des moyens pour les ondes ultrasonores parasites.

Selon un autre mode de réalisation, les moyens d'atténuation comprennent une entrée et une sortie pour l'écoulement de fluide et comprennent au moins un obstacle disposé entre l'entrée et la sortie de manière à faire office d'écran entre l'entrée et la sortie pour les ondes ultrasonores parasites. L'obstacle peut être en matériau absorbant les ondes ultrasonores.

Selon des caractéristiques préférées de l'invention :
- l'obstacle est placé en face de l'entrée,
- l'obstacle sépare l'écoulement de fluide issu de l'entrée en au moins deux flux. Le fait de séparer ainsi l'écoulement permet de conserver des sections de passage relativement grandes et donc de garder une perte de charge relativement faible.
- l'obstacle possède en vis à vis de l'entrée une forme profilée s'étendant vers ladite entrée afin de favoriser la séparation de l'écoulement,
- l'obstacle possède en vis à vis de la sortie une forme profilée s'étendant vers la sortie,
- l'obstacle a une forme permettant à l'écoulement de circuler tout autour dudit obstacle.

L'obstacle peut comprendre au moins une partie qui réfléchit les ondes ultrasonores. Il est également possible que l'obstacle en entier soit réalisé dans un matériau réfléchissant les ondes ultrasonores à la (ou aux) fréquence(s) ultrasonore(s) utilisée(s) dans le compteur.

Lorsque la source de bruit extérieure au compteur se situe en amont (resp. en aval) dudit compteur, les moyens d'atténuation sont disposés en amont (resp. en aval) du trajet de mesure ultrasonore.

Il est en outre tout à fait envisageable de disposer des moyens d'atténuation en amont du trajet de mesure ultrasonore ainsi qu'en aval.

Selon un autre mode de réalisation de l'invention, le compteur comprend un conduit de mesure axial dans lequel le fluide s'écoule d'amont en aval et dont une partie munie d'une extrémité pénètre dans une chambre dite de mesure sur une certaine longueur, le matériau absorbant les ondes ultrasonores parasites étant agencé dans ladite chambre de mesure sur au moins une portion de la longueur pénétrante du conduit de mesure qui inclut ladite l'extrémité et de manière à ménager, à l'extérieur dudit conduit de mesure, au moins un espace dans lequel le fluide s'écoule parallèlement à l'axe de ce conduit en sens inverse de l'écoulement du fluide dans ledit conduit.

Ainsi, le fluide est en contact avec le matériau absorbant les ondes ultrasonores parasites sur une grande longueur le long du conduit de mesure ce qui favorise de multiples réflexions desdites ondes sur le matériau et ainsi atténue fortement l'amplitude de ces ondes.

De plus, étant donné que cette atténuation a lieu dans la chambre de mesure immédiatement en amont ou en aval du trajet de mesure (suivant la localisation de la source extérieure du bruit), il est assuré que le trajet de mesure ne sera pas perturbé par de telles ondes parasites.

Ce mode de réalisation est encore plus efficace que les modes de réalisation dans lesquels les moyens d'atténuation sont plus éloignés du trajet de mesure car, dans ces modes de réalisation, une partie des ondes ultrasonores peuvent malgré tout être propagées par la structure métallique du compteur et ainsi atteindre le trajet de mesure par un chemin détourné qui évite lesdits moyens d'atténuation.

Selon ce mode de réalisation, un espace périphérique est par exemple ménagé autour du conduit de mesure, le matériau absorbant les ondes ultrasonores parasites étant en contact avec les parois de la chambre de mesure.

Toujours selon ce mode de réalisation, le matériau absorbant les ondes ultrasonores est en contact, d'une part, avec les parois de la chambre de mesure et, d'autre part, avec le conduit de mesure de manière à ménager deux espaces sous la forme de canaux situés de part et d'autre dudit conduit de mesure.

Plus particulièrement, le matériau absorbant les ondes ultrasonores entoure complètement le conduit de mesure de manière à ce que les canaux ne soient pas en contact avec ledit conduit de mesure.

Ainsi, l'écoulement de fluide dans chaque canal est totalement entouré par le matériau absorbant les ondes ultrasonores parasites ce qui accroît encore l'efficacité de l'atténuation.

D'autres caractéristiques et avantages apparaîtront au cours de la description qui va suivre donnée à titre d'exemple illustratif et non limitatif et faite en référence aux dessins annexés sur lesquels :
- la figure 1 est une vue schématique en coupe longitudinale d'une configuration d'un compteur de gaz à ultrasons,
- la figure 1a est une vue schématique agrandie en coupe d'un premier mode de réalisation des moyens d'atténuation des ondes ultrasonores parasites disposés dans la chambre 22 de la figure 1 dans le même plan que celui de la figure 1,
- la figure 2a est une vue schématique analogue à celle de la figure 1a d'un deuxième mode de réalisation des moyens d'atténuation des ondes ultrasonores parasites,
- la figure 2b est une vue de la figure 2 en coupe suivant A-A,
- la figure 3 est une vue schématique d'une première variante de réalisation des moyens d'atténuation représentés à la figure 2a,
- la figure 4 est une vue schématique d'une deuxième variante de réalisation des moyens d'atténuation représentés à la figure 2a,
- la figure 5 est une vue schématique d'une troisième variante de réalisation des moyens d'atténuation représentés à la figure 2a,
- la figure 6 est une vue schématique agrandie analogue à celle de la figure 1a d'un troisième mode de réalisation des moyens d'atténuation des ondes ultrasonores parasites,
- la figure 6a est une vue de la figure 6 en coupe suivant B-B,
- la figure 6b est une vue schématique d'une première variante de réalisation des moyens d'atténuation représentés aux figures 6 et 6a dans le même plan de coupe que celui de la figure 6a,
- la figure 7 est une vue schématique réduite d'une deuxième variante de réalisation des moyens d'atténuation représentés à la figure 6,
- la figure 8 est une vue schématique d'une troisième variante de réalisation des moyens d'atténuation représentés à la figure 6,
- la figure 9 est une vue schématique d'une quatrième variante de réalisation des moyens d'atténuation représentés à la figure 6,
- la figure 10 est une vue schématique analogue à celle de la figure 6 d'un quatrième mode de réalisation des moyens d'atténuation des ondes ultrasonores parasites,
- la figure 11 est une première variante de réalisation des moyens d'atténuation représentés à la figure 10,
- la figure 11a ést une deuxième variante de réalisation des moyens d'atténuation représentés à la figure 10,
- la figure 12 est une vue schématique en coupe longitudinale analogue à celle de la figure 1 d'une autre configuration de compteur de gaz à ultrasons,
- la figure 13 est une vue partielle de la figure 12 en coupe suivant C-C,
- la figure 14 est une vue schématique agrandie en coupe de moyens d'atténuation analogues à ceux de la figure 6 et appliqués au compteur de gaz représenté à la figure 12,
- la figure 15 est une vue de la figure 14 en coupe suivant D-D,
- la figure 16 est une vue en coupe d'un autre exemple de moyens d'atténuation des ondes ultrasonores parasites pour un compteur de gaz à ultrasons dans lequel les entrées et sorties pour l'écoulement de gaz sont alignées,
- la figure 17 représente deux courbes A et B qui traduisent le spectre de bruit mesuré en aval du compteur de gaz à ultrasons de la figure 1 respectivement sans système d'atténuation des ondes ultrasonores parasites (courbe A) et avec le système d'atténuation des ondes ultrasonores parasites représenté aux figures 2a et 2b (courbe B).
- les figures 18a et 18b représentent respectivement deux signaux ultrasonores reçus par un transducteur ultrasonore après émission par un autre transducteur dans le compteur de gaz représenté sur la figure 1, en présence d'une même source de bruit extérieure, sans moyens d'atténuation des ondes ultrasonores parasites (Fig 18a) et avec les moyens d'atténuation représentés à la figure 11a (Fig 18b),
- la figure 19 est une vue schématique en coupe longitudinale d'une troisième configuration de compteur de gaz à ultrasons dans laquelle un autre mode de réalisation des moyens d'atténuation est représenté,
- la figure 20 est une vue en coupe de la figure 19 suivant E-E,
- les figures 21 à 23 sont des variantes de réalisation de la figure 20.

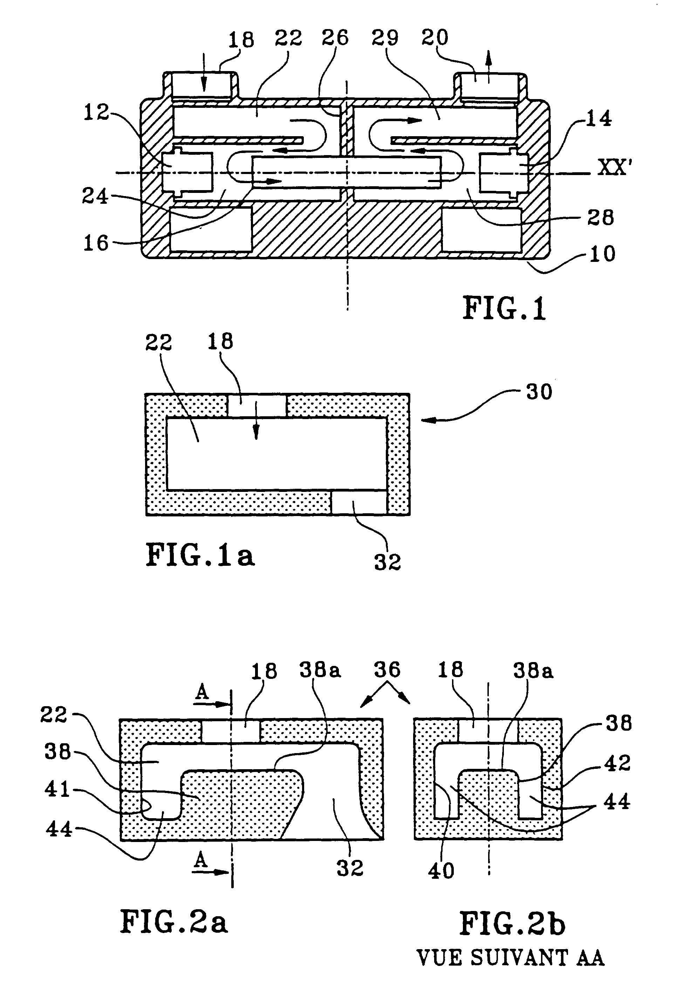

La figure 1 est une vue schématique en coupe longitudinale d'un compteur de gaz à ultrasons 10 dans lequel deux transducteurs ultrasonores 12, 14 sont disposés aux deux extrémités opposées d'un conduit de mesure 16 de forme par exemple cylindrique et définissant ainsi entre eux un trajet de mesure ultrasonore longitudinal dans le fluide qui s'écoule dans ledit conduit.

Chaque transducteur est à la fois émetteur et récepteur d'ondes ultrasonores qui se propagent dans le fluide à une fréquence ultrasonore par exemple de l'ordre de 40kHz.

Il convient de noter que l'invention n'est pas limitée à un agencement et à un nombre particulier des transducteurs ultrasonores ni même à leur(s) fréquence(s) d'utilisation. Par exemple, le conduit peut avoir une forme de fente ayant une section transversale rectangulaire et les transducteurs peuvent être disposés dans ledit conduit sur l'une des parois tel que décrit dans la demande de brevet WO 91 09 280.

Il est également possible d'utiliser plus de deux transducteurs ultrasonores comme cela est décrit dans la demande de brevet DE 42 41 225.

Selon cette figure, le compteur 10 comprend un corps auquel sont raccordées une entrée 18 et une sortie 20 pour le gaz en forme de U. Les entrées et sorties peuvent aussi être alignées. L'écoulement de gaz provenant de l'entrée 18 débouche dans une première chambre 22, parcourt cette chambre longitudinale suivant l'axe XX' du trajet de mesure ultrasonore et débouche dans une deuxième chambre 24 de faibles dimensions dans laquelle se trouvent l'un 12 des transducteurs ultrasonores et une première partie du conduit de mesure 16.

Une paroi 26 sépare le corps du compteur en deux parties et est traversée par le conduit de mesure 16. Ainsi, le seul passage possible pour le gaz entre l'entrée et la sortie du compteur est réalisé par l'intermédiaire du conduit de mesure 16.

A son entrée dans la deuxième chambre 24, l'écoulement de gaz emprunte un coude à 180°, longe la première partie du conduit de mesure 16 suivant la direction longitudinale XX' en s'écartant de la paroi 26 puis emprunte un autre coude à 180° en entrant dans ledit conduit 16.

L'écoulement de gaz traverse le conduit de mesure 16 et débouche dans une troisième chambre 28 de faibles dimensions dans laquelle se trouvent l'autre transducteur 14 et la seconde partie du conduit de mesure 16.

A sa sortie du conduit de mesure, l'écoulement de gaz emprunte un coude à 180°, longe la seconde partie du conduit suivant la direction longitudinale XX' vers la paroi 26, et sort de cette chambre 28 en empruntant un autre coude à 180°. L'écoulement pénètre ensuite dans une quatrième chambre 29 qu'il parcourt longitudinalement suivant l'axe XX' en s'écartant de la paroi 26 et emprunte la sortie 20 du compteur. Comme représenté sur la figure 1, le compteur est symétrique par rapport au plan contenant la paroi 26 et perpendiculaire à l'axe XX'.

Un régulateur de pression (non représenté) est placé en amont de ce compteur et représente la source de bruit extérieure qui génère notamment des ondes ultrasonores parasites se propageant dans l'écoulement de gaz notamment à la fréquence de 40 kHz et qui possèdent une amplitude de pression suffisamment élevée pour perturber les mesures ultrasonores effectuées entre les transducteurs 12, 14.

Afin d'éviter tout risque de perturbation, des moyens d'atténuation de l'amplitude des ondes ultrasonores parasites sont associés au compteur et sont disposés entre le régulateur de pression et le trajet de mesure ultrasonore. Ces moyens d'atténuation ne sont pas représentés sur la figure 1 pour la clarté de l'exposé. Par exemple, les moyens d'atténuation des ondes parasites ultrasonores sont disposés dans la première chambre 22 du compteur.

Comme représenté sur la figure 1a, selon un premier mode de réalisation de l'invention, les moyens d'atténuation 30 des ondes parasites ultrasonores sont formés d'une chambre qui correspond à la première chambre 22 du compteur et comprennent une entrée correspondant à l'entrée 18 dudit compteur et une sortie 32 qui correspond à l'ouverture entre les première 22 et deuxième 24 chambres de la figure 1. La figure 1a se situe dans le même plan que celui de la figure 1 et est une vue agrandie de la chambre 22 de la figure 1.

La chambre 22 possède des parois qui sont réalisées dans un matériau absorbant les ondes ultrasonores à la fréquence des ondes ultrasonores transmises entre les transducteurs.

Ce matériau absorbant a une structure poreuse et la taille des pores est choisie de façon à provoquer l'atténuation souhaitée. On choisit par exemple un matériau qui possède une caractéristique d'atténuation d'environ 15 décibels par centimètre à 40 kHz. Ce matériau est par exemple une mousse de polyuréthanne qui est un mélange d'isocyanate et de polyol dont la densité varie entre 30 à 80 kg/m³.

La consistance de la mousse peut-être souple voire rigide.

Par exemple, la mousse polyuréthanne est obtenue par mélange en quantités égales des produits Isorob 058 et Isothane 1320 commercialisés par la société ROBBE S.A. domiciliée à Venette B.P. 609, 60206 Compiège, France.

On choisit une épaisseur de paroi en matériau absorbant par exemple d'environ 5 mm.

Le fait d'associer au compteur de gaz une chambre de ce type, permet aux ondes ultrasonores parasites qui sont propagées par l'écoulement venant de l'amont de se réfléchir plusieurs fois sur le matériau absorbant constituant les parois et donc d'atténuer l'amplitude de ces ondes. Il est ainsi possible d'atténuer de 20 décibels le niveau de bruit.

L'entrée 18 et la sortie 32 de cette chambre 22 pourraient également être alignées entre elles.

Selon un deuxième mode de réalisation de l'invention, les moyens d'atténuation 36 des ondes parasites ultrasonores sont ceux représentés sur les figures 2a et 2b.

La paroi 38 de la chambre 22 qui est située en face de l'entrée 18 est déformée vers l'intérieur de ladite chambre en direction de ladite entrée et forme ainsi une saillie centrale qui ménage avec les autres parois 40, 41 et 42 de la chambre, un canal 44 entourant partiellement ladite saillie centrale. Les parois de la chambre sont réalisées dans un matériau absorbant les ondes ultrasonores. Le canal 44 constitue un piège pour les ondes ultrasonores qui s'y réfléchissent plusieurs fois en perdant de l'énergie après s'être tout d'abord réfléchies sur la face supérieure 38a de la saillie centrale 38.

La paroi 38 a été déformée dans le but de faire office d'écran entre l'entrée 18 et la sortie 32, empêchant ainsi le passage direct, c'est-à-dire sans réflexions, des ondes ultrasonores parasites de l'entrée vers la sortie.

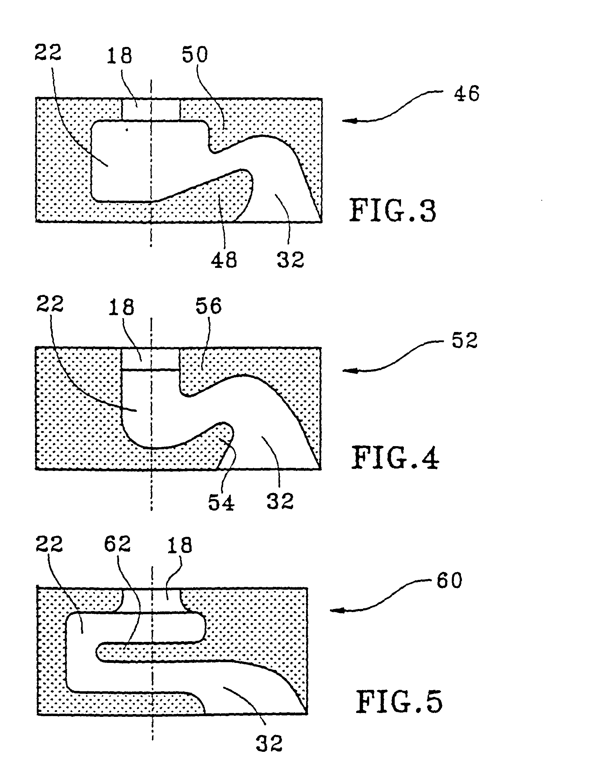

Selon une variante de réalisation, les moyens d'atténuation 46 des ondes parasites ultrasonores sont ceux représentés sur la figure 3.

Sur cette figure, les parois 48 et 50 de la chambre 22 qui sont en vis à vis sont déformées en amont de la sortie 32 vers l'intérieur de ladite chambre et en direction l'une de l'autre, de manière à former un rétrécissement pour l'écoulement de gaz.

Les parois ainsi déformées forment un écran entre l'entrée 18 et la sortie 32 vis à vis des ondes ultrasonores et les obligent donc à se réfléchir sur le matériau absorbant constituant les parois de la chambre 22 avant d'atteindre ladite sortie 32.

La Demanderesse a là aussi pu constater une très nette atténuation du niveau de bruit.

Selon une autre variante des moyens d'atténuation 52 des ondes ultrasonores parasites représentée à la figure 4, les parois 54, 56 en matériau absorbant les ondes ultrasonores de la chambre 22 sont déformées vers l'intérieur de ladite chambre de manière à conférer à la chambre une forme de siphon.

Compte tenu de cette configuration, les ondes ultrasonores parasites qui franchissent l'entrée 18 de la chambre sont soumises à des réflexions multiples avant de parvenir à la sortie 32 où leur amplitude est fortement atténuée.

Comme représenté à la figure 5, selon encore une autre variante, les moyens d'atténuation 60 des ondes ultrasonores parasites possèdent une paroi 62 qui s'étend devant l'entrée 18 de la chambre 22 perpendiculairement à la direction de l'écoulement de gaz débouchant de ladite entrée de manière à masquer la sortie 32 aux ondes ultrasonores parasites provenant de l'entrée.

La paroi ainsi déformée oblige l'écoulement de gaz à suivre un chemin sinueux le long duquel les ondes ultrasonores parasites véhiculées par ledit écoulement se réfléchissent plusieurs fois sur les parois en matériau absorbant de la chambre 22. Une telle configuration conduit par exemple à atténuer de 40 décibels par décade le niveau de bruit propagé par l'écoulement de gaz.

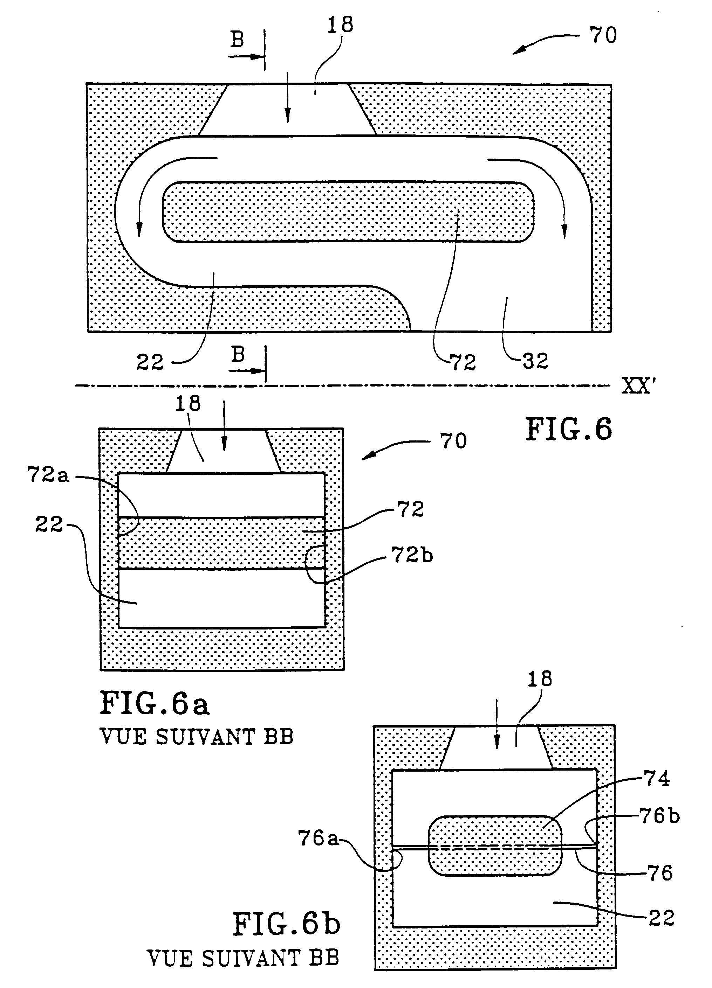

Pour obtenir simultanément une forte atténuation des ondes ultrasonores parasites et une perte de charge acceptable pour l'écoulement de gaz, un troisième mode de réalisation de l'invention est représenté à la figure 6. D'après cette figure, les moyens d'atténuation 70 des ondes ultrasonores parasites comprennent un obstacle 72 logé dans la chambre 22 du compteur de gaz entre l'entrée 18 et la sortie 32 de ladite chambre.

L'obstacle 72 de forme par exemple parallélépipèdique est disposé en face de l'entrée 18 et s'étend suivant toute une dimension de la chambre dans une direction perpendiculaire à l'axe XX' (Fig 6a). L'obstacle est fixé à ses deux extrémités opposées 72a et 72b aux parois opposées de la chambre 22 et l'écoulement de gaz issu de l'entrée 18 est donc partagé en deux flux par ledit obstacle ainsi que représenté sur la figure 6.

L'obstacle 72 fait office d'écran entre l'entrée et la sortie pour les ondes ultrasonores parasites propagées par l'écoulement de gaz issu de l'entrée, obligeant ainsi lesdites ondes à des réflexions multiples sur les parois de la chambre et sur l'obstacle.

Les parois de la chambre et l'obstacle sont réalisés dans un matériau absorbant les ondes ultrasonores tel que décrit ci-dessus si bien que les ondes ultrasonores parasites qui ont subi de nombreuses réflexions après la traversée de la chambre 22 ont une amplitude de pression qui est fortement atténuée.

Il convient de noter que l'obstacle n'a pas nécessairement cette forme et peut par exemple prendre une forme permettant à l'écoulement de gaz de circuler tout autour dudit obstacle. Dans ce cas, l'obstacle 74 est par exemple maintenu en place dans la chambre 22 au moyen d'une tige 76 le traversant et qui est fixée à ses deux extrémités opposées 76a et 76b aux parois opposées de la chambre 22 (Fig 6b).

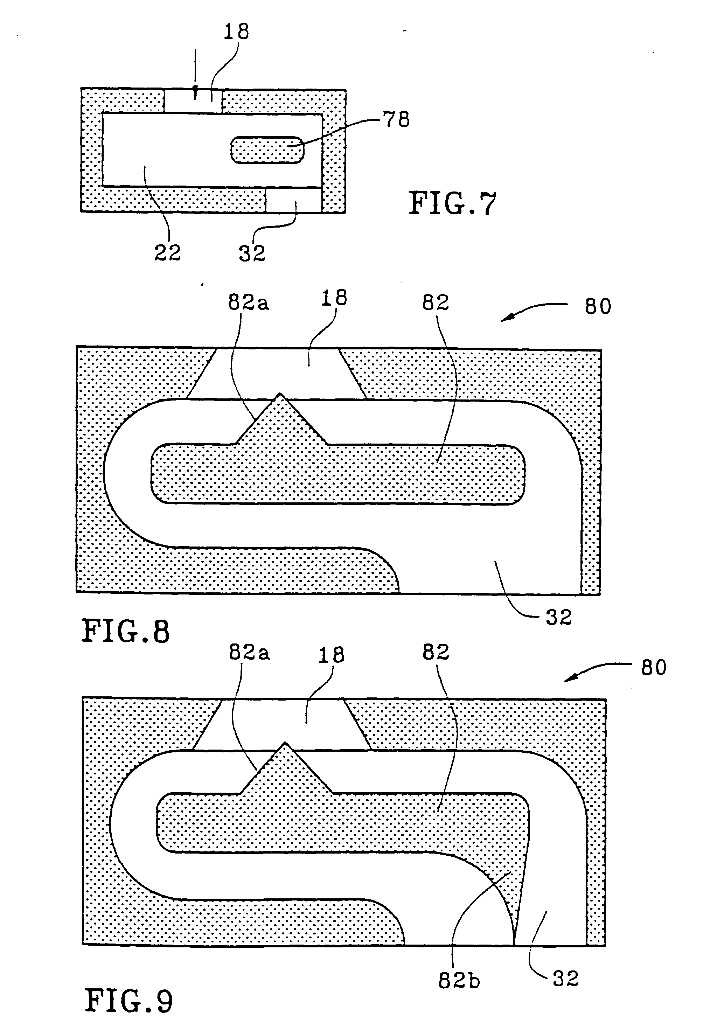

Il est également possible de prévoir un obstacle 78 tel que représenté sur la figure 7 et sur laquelle l'obstacle n'est pas situé en face de l'entrée 18.

L'obstacle 78 est alors disposé en face de la sortie 32 afin d'empêcher le passage direct de l'entrée vers la sortie des ondes ultrasonores parasites.

Une telle configuration est intéressante lorsque l'on souhaite par exemple placer un organe de coupure de l'écoulement de gaz dans l'espace ménagé dans la chambre 22 en face de l'entrée.

Afin de faciliter la séparation de l'écoulement de gaz issu de l'entrée 18 en au moins deux flux de gaz, on peut conférer à l'obstacle 82 une forme profilée 82a en vis à vis de ladite entrée et s'étendant vers celle-ci, ainsi que représenté sur la figure 8.

Pour augmenter l'efficacité de ce séparateur d'écoulement, la forme profilée se prolonge avantageusement dans l'entrée 18.

La forme profilée 82a rapportée à l'obstacle 82 de forme parallélépipèdique présente une section triangulaire dans le plan de la figure 8 et a par exemple une forme de cône lorsque l'entrée 18 a une section de passage triangulaire.

En vue de réduire les pertes de charge à l'endroit de la chambre 22 où les flux de gaz pénètrent dans la sortie 32, il est possible de procurer à l'obstacle 82 une forme profilée 82b située en vis à vis de ladite sortie 32 et s'étendant vers celle-ci, ainsi que représenté sur la figure 9.

Sur cette figure, on a également représenté la forme profilée 82a de l'obstacle décrite en référence à la figure 8. Cependant, la présence simultanée de ces deux formes profilées n'est pas une nécessité.

La forme profilée 82b exerce en fait la fonction d'un bord de fuite sur une aile d'avion. Les flux de gaz sont ainsi mieux canalisés vers la sortie, limitant par là même les pertes de charge.

La forme profilée 82b s'étend sur toute la dimension de la sortie 32 qui est perpendiculaire au plan de la figure 9.

Dans le plan de la figure 9, la forme profilée 82b possède deux parois reproduisant sensiblement chacune le contour de la paroi de la chambre 22 qui est située en face, en offrant aux flux de gaz une légère augmentation de section de passage.

Les deux parois de la forme profilée 82b se rejoignent pour former une arête qui se prolonge dans la sortie 32.

Il convient de remarquer qu'il est possible de combiner les caractéristiques des premier et deuxième modes de réalisation pour obtenir des moyens d'atténuation comprenant des parois en matériau absorbant les ondes ultrasonores déformées vers l'intérieur de la chambre ainsi qu'un obstacle.

On peut aussi concevoir des moyens d'atténuation dans lesquels seul l'obstacle est réalisé dans un matériau absorbant les ondes ultrasonores.

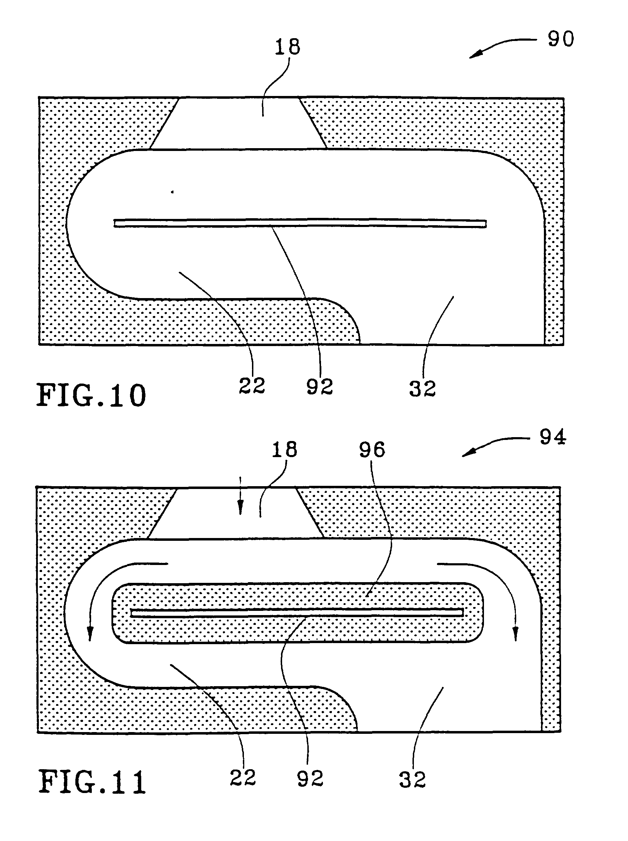

Selon un quatrième mode de réalisation de l'invention représenté à la figure 10, les moyens d'atténuation 90 des ondes ultrasonores parasites comprennent un obstacle 92 logé dans la chambre 22 du compteur de gaz entre l'entrée 18 et la sortie 32 de manière à faire office d'écran pour les ondes ultrasonores entre l'entrée et la sortie.

L'obstacle 92 est réalisé dans un matériau réfléchissant les ondes ultrasonores tel que par exemple une feuille de carton ou de matière plastique et se présente par exemple sous la forme d'une plaque parallélépipèdique par exemple d'épaisseur égale à 1mm. La plaque s'étend suivant une direction perpendiculaire au plan de la figure 10 et est fixée par ses deux extrémités opposées aux parois opposées de la chambre 22. Les parois de la chambre 22 sont, quant à elles, réalisées dans un matériau absorbant les ondes ultrasonores comme décrit précédemment. Ainsi, les ondes ultrasonores parasites générées à la fréquence de 40 kHz provenant de l'entrée 18 se réfléchissent sur l'obstacle 92 puis sur les parois de la chambre où elles perdent une énergie considérable avant d'atteindre la sortie 32.

L'obstacle réfléchissant n'est pas nécessairement situé en vis à vis de l'entrée 18. Cependant, lorsque l'obstacle est situé en vis à vis de l'entrée, les ondes ultrasonores parasites s'y réfléchissent et sont directement dirigées sur les parois de la chambre puis de nouveau sur l'obstacle, et successivement on observe des réflexions multiples des ondes sur l'obstacle et les parois, permettant ainsi d'atténuer fortement l'amplitude de ces ondes et donc de réduire le niveau acoustique.

L'obstacle peut être placé en vis à vis de la sortie 32. Ainsi, les ondes ultrasonores parasites seront d'abord réfléchies et atténuées par les parois de la chambre 22 avant de rencontrer l'obstacle réfléchissant qui les dirigera de nouveau sur les parois où elle se réfléchissent encore ce qui accentuera davantage leur atténuation.

Pour accroître l'efficacité d'atténuation des ondes ultrasonores, les moyens d'atténuation 94 représentés à la figure 11 comprennent en combinaison un obstacle absorbant 96 tel que décrit par rapport à la figure 6 sous la référence 72 et un obstacle réfléchissant 92 tel que décrit en référence à la figure 10, les parois de la chambre 22 étant réalisées dans un matériau absorbant les ondes ultrasonores. On obtient ainsi un obstacle composite dont une partie 92 est réfléchissante, l'autre 96 étant absorbante.

L'obstacle réfléchissant 92 supprime complètement tout trajet direct des ondes ultrasonores de l'entrée 18 vers la sortie 32 et l'obstacle absorbant 96 contribue à atténuer l'amplitude des ondes ultrasonores. Étant donné que l'obstacle 96 est réalisé en matériau absorbant les ondes ultrasonores, il n'est pas indispensable que les parois de la chambre soient elles aussi absorbantes.

Toutefois, lorsque les parois de la chambre sont également réalisées dans un matériau absorbant les ondes ultrasonores, l'efficacité des moyens d'atténuation est plus grande.

La Demanderesse a ainsi pu constater une diminution du bruit d'environ 50 décibels.

Il est également possible de profiler l'obstacle 96 en vis à vis de l'entrée 18 et de la sortie 32 comme celà est décrit en référence aux figures 8 et 9 et l'on obtient ainsi les moyens d'atténuation 95 représentés à la figure 11a. L'obstacle a par exemple une épaisseur de 10 mm.

Avec de tels moyens, l'atténuation est par exemple de 50 décibels pour une perte de charge d'environ 20Pa à un débit de gaz de 6m³/h.

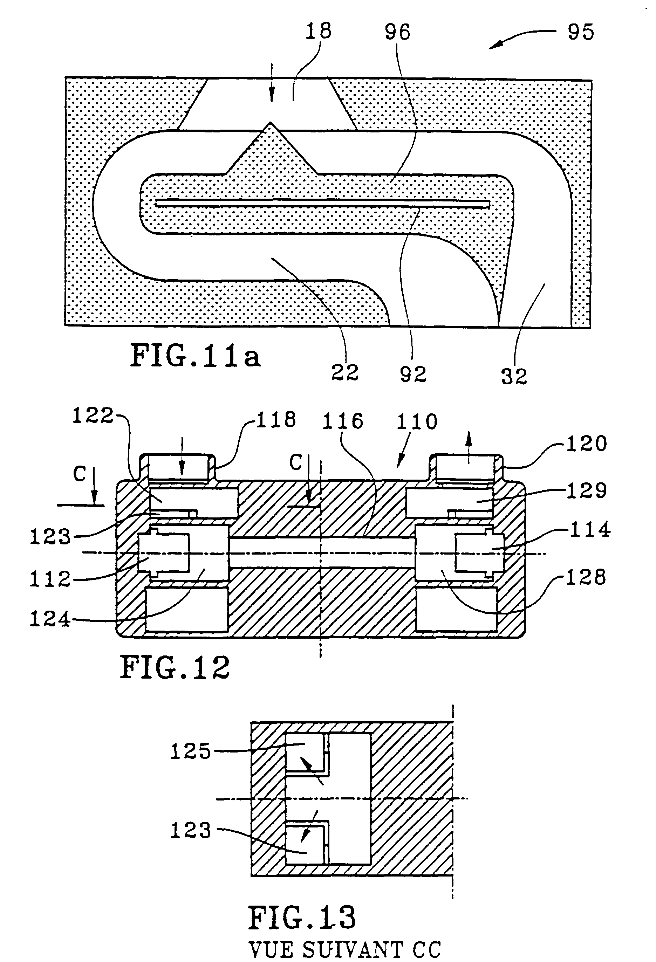

Bien que les différents moyens d'atténuation des ondes ultrasonores parasites aient été décrits en relation avec un compteur de gaz comme représenté sur la figure 1, de tels systèmes s'appliquent à tout type de compteur à ultrasons et à toute configuration telle que par exemple celle représentée aux figures 12 et 13.

Dans le compteur de gaz 100 représenté aux figures 12 et 13, l'écoulement de gaz pénètre par l'entrée 118 et débouche dans la chambre 122 dont la paroi située en vis à vis de ladite entrée comporte deux ouvertures 123, 125 qui forment des sorties pour l'écoulement de gaz.

L'écoulement de gaz heurte cette paroi et se fractionne en deux parties qui s'engouffrent chacune dans l'une des ouvertures de sortie de la chambre 122.

Conformément à l'invention et à ce qui a déjà été décrit précédemment, les moyens d'atténuation des ondes ultrasonores parasites sont par exemple disposés dans la chambre 122 et comportent des parois réalisées dans un matériau absorbant les ondes ultrasonores.

Les moyens d'atténuation peuvent également comporter un obstacle absorbant et/ou réfléchissant les ondes ultrasonores.

Il est aussi possible que les moyens d'atténuation comportent un obstacle absorbant les ondes ultrasonores mais que les parois de la chambre ne soient pas réalisées dans un matériau absorbant les ondes ultrasonores ou encore que l'obstacle soit à la fois absorbant et réfléchissant mais que les parois ne soient pas absorbantes.

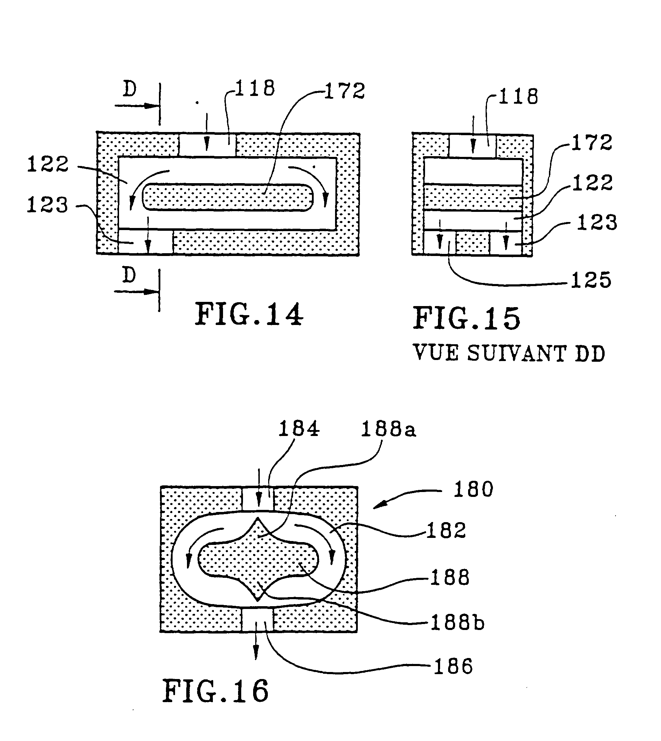

Ainsi, comme représenté aux figures 14 et 15, et de manière analogue à ce qui a été décrit en référence aux figures 6 et 6a, les moyens d'atténuation des ondes ultrasonores parasites comprennent un obstacle absorbant 172 disposé dans la chambre 122 entre l'entrée 118 et les sorties 123, 125 et faisant office d'écran pour lesdites ondes ultrasonores parasites.

Les parois de la chambre 122 sont réalisées dans un matériau absorbant les ondes ultrasonores.

On peut également prévoir un obstacle tel que représenté sur la figure 6b.

L'invention s'applique aussi à un compteur de fluide à ultrasons qui comporte des entrée et sortie alignées.

Par exemple, les moyens d'atténuation des ondes ultrasonores parasites associé à un tel compteur peuvent revêtir la forme représentée sur la figure 16. D'après cette figure, les moyens d'atténuation 180 réalisés sous la forme d'une chambre 182 comprennent dans l'alignement une entrée 184 et une sortie 186 pour l'écoulement de fluide ainsi qu'un obstacle 188 formant écran entre l'entrée et la sortie pour les ondes ultrasonores parasites.

L'obstacle est par exemple fixé à deux extrémités opposées aux parois opposées de la chambre de manière analogue à l'obstacle 172 des figures 14 et 15. Ainsi, l'écoulement de fluide est séparé en deux flux.

Il est aussi possible de concevoir un obstacle comme celui de la figure 6b autour duquel l'écoulement de fluide circule.

L'obstacle représenté sur la figure 16 possède deux formes profilées 188a et 188b respectivement situées en vis à vis de l'entrée 184 et de la sortie 186 et s'étendant vers celles-ci, conférant audit obstacle une forme générale de toupie.

D'après cette figure, l'obstacle et les parois de la chambre sont réalisées dans un matériau absorbant les ondes ultrasonores parasites. De manière analogue à ce qui a été décrit précédemment, les parois peuvent ne pas absorber les ondes ultrasonores.

On peut également prévoir des parois absorbantes et un obstacle absorbant et/ou réfléchissant les ondes ultrasonores ou bien des parois non absorbantes et un obstacle absorbant et réfléchissant les ondes ultrasonores.

Dans tout ce qui a été décrit en référence aux figures 1 à 16, il convient de noter que lorsque les moyens d'atténuation comprennent un obstacle et des parois réalisés dans un matériau absorbant les ondes ultrasonores, le matériau utilisé pour les parois n'étant pas nécessairement le même que celui de l'obstacle.

Il convient de remarquer que les moyens d'atténuation 180 peuvent aussi s'appliquer à un compteur de fluide à ultrasons dans lequel les entrée et sortie dudit compteur ne sont pas alignées (Fig 1 et Fig 2).

L'invention s'applique en outre à un compteur de fluide à ultrasons dans lequel deux ou plus de deux fréquences ultrasonores sont utilisées pour la mesure entre les transducteurs ultrasonores. Dans ce cas, les moyens d'atténuation sont choisis de façon à atténuer les ondes ultrasonores aux fréquences utilisées par le compteur de fluide.

L'invention s'applique notamment à un compteur de fluide tel que décrit dans la demande de brevet GB 2 275 108 dans laquelle on utilise deux fréquences ultrasonores différentes pour la propagation des ondes ultrasonores entre les transducteurs.

Dans ce cas, le matériau constitutif des parois et/ou de l'obstacle doit être choisi de manière à absorber les ondes ultrasonores parasites émises à ces deux fréquences par une source extérieure au compteur.

Certaines méthodes de mesure ultrasonore utilisent une fréquence variable dans une gamme de fréquences ultrasonores et là aussi l'invention peut s'appliquer à des compteurs de fluide dans lesquels sont mises en oeuvre de telles méthodes.

Il convient en outre de noter qu'à un compteur de fluide à ultrasons peuvent être associés des moyens d'atténuation des ondes ultrasonores parasites disposés en aval du trajet de mesure ultrasonore et par exemple dans la chambre 29 du compteur de la figure 1 ou dans la chambre 129 du compteur de la figure 12 pour empêcher toute source extérieure située en aval dudit compteur de perturber le fonctionnement de celui-ci à la (ou aux) fréquence(s) de travail utilisée(s) par les transducteurs.

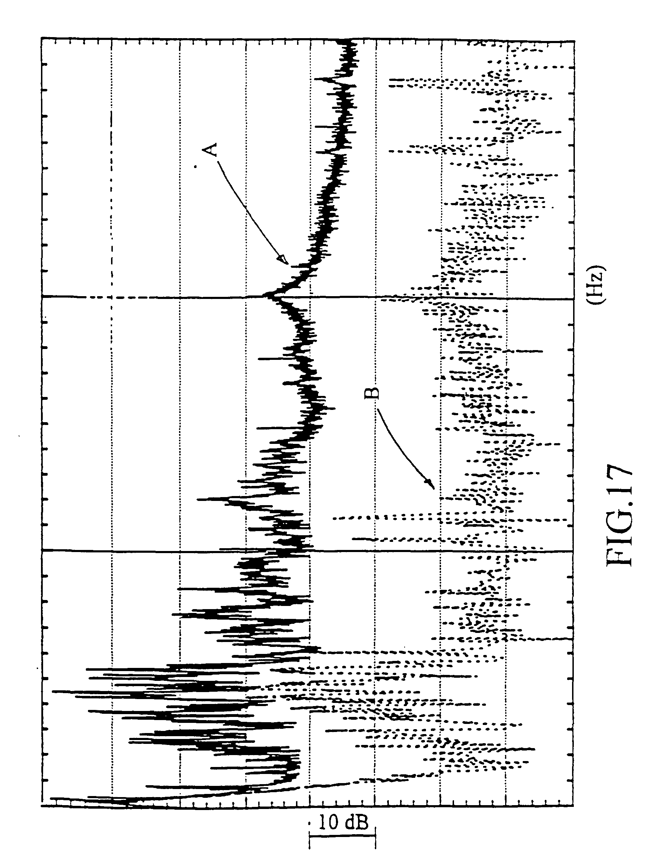

La figure 17 représente deux courbes A et B qui traduisent le spectre de bruit mesuré en aval du compteur de gaz à ultrasons de la figure 1, respectivement sans moyens d'atténuation des ondes ultrasonores parasites (courbe A) et avec les moyens d'atténuation des ondes ultrasonores parasites représentés aux figures 2a et 2b (courbe B).

On constate ainsi une diminution de 10 décibels par décade du niveau de bruit mesuré en aval du compteur avec les moyens d'atténuation choisis.

Avec le système d'atténuation représenté à la figure 11a, cette diminution peut atteindre 50 décibels.

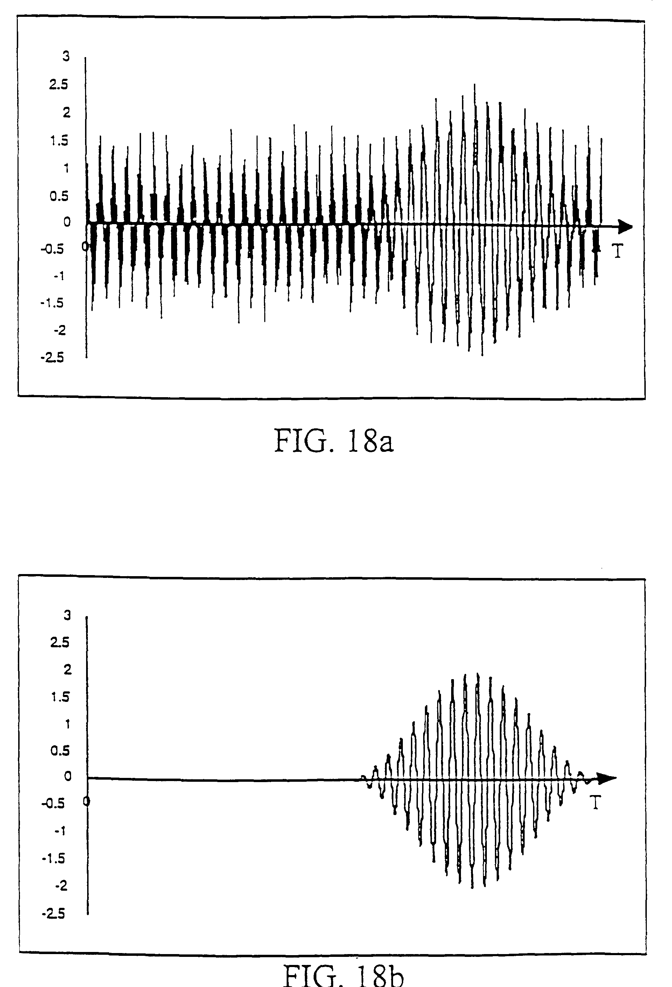

L'efficacité des moyens d'atténuation des ondes ultrasonores parasites selon l'invention est manifeste et les figures 18a et 18b illustrent parfaitement cette efficacité.

La figure 18a représente l'allure d'un signal ultrasonore reçu par un des transducteurs ultrasonores après émission d'un signal par l'autre transducteur en présence d'une source extérieure de bruit située en amont du compteur de la figure 1 sans moyens d'atténuation des ondes ultrasonores parasites. Il est parfaitement clair que ce signal n'est pas exploitable.

Par contre, lorsque des moyens d'atténuation des ondes ultrasonores parasites tels que ceux représentés à la figure 11 sont associés au compteur de la figure 1, l'allure du signal ultrasonore reçu par ce même transducteur en présence de la même source extérieure de bruit est celle représentée à la figure 18b.

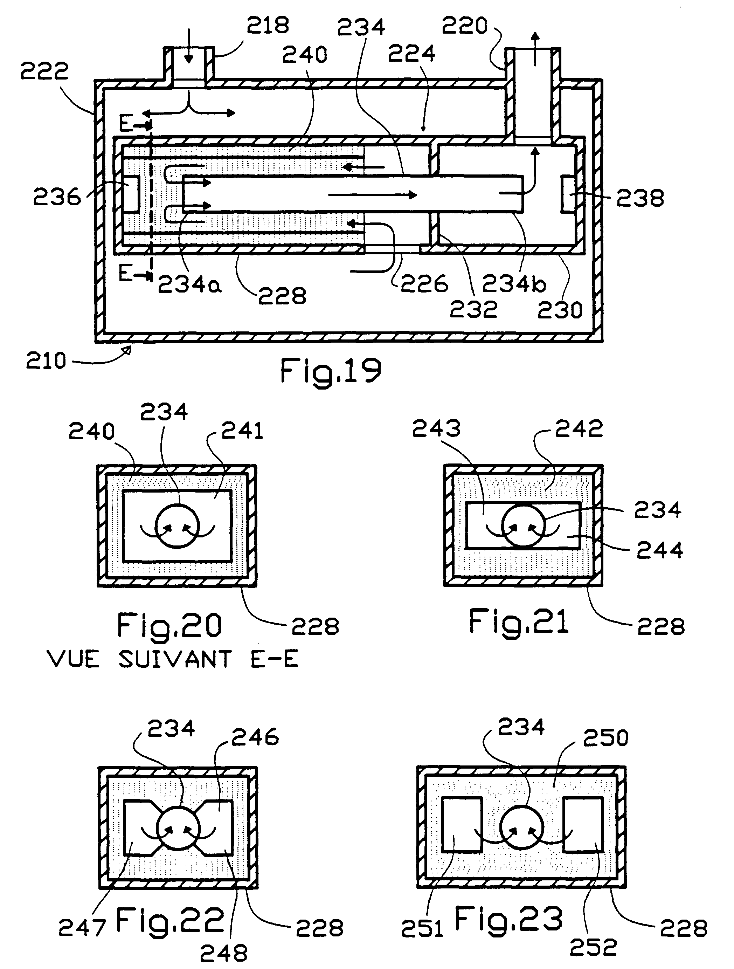

Un autre mode de réalisation des moyens d'atténuation selon l'invention est représenté sur les figures 19 et 20.

Le compteur de gaz 210 représenté sur la figure 19 comprend une ouverture d'amenée 218 et une ouverture d'évacuation 220 de gaz.

L'écoulement de gaz issu de l'ouverture 218 pénètre dans une enceinte 222 où il se répartit autour d'un bloc de mesure 224 et s'engouffre dans ledit bloc par une fenêtre 226 aménagée dans la partie inférieure du bloc.

Le bloc de mesure comprend deux chambres dites de mesure 228 et 230 séparées par une cloison 232 et un conduit de mesure 234 réalisé par exemple sous la forme d'un tube ou d'un conduit, tel que décrit dans le brevet européen n° 0 538 930, dont la surface interne a une forme d'ellipsoïde et qui possède à l'intérieur, le long de son grand axe, un obstacle en forme d'ogive de manière à former un passage annulaire autour dudit obstacle.

Le conduit axial 234 traverse la cloison 232 et pénètre partiellement dans les chambres 228 et 230 sur une certaine longueur.

Deux transducteurs ultrasonores 236, 238 sont disposés respectivement en face des deux extrémités 234a, 234b du conduit de mesure 234.

Dans la configuration décrite dans le brevet européen n°0 538 930 les transducteurs ultrasonores sont disposés respectivement aux foyers de l'ellipsoïde de façon à ce que toutes les ondes ultrasonores émises par l'un des transducteurs à l'intérieur du conduit soient réfléchies par la surface interne de l'ellipsoïde et reçues par l'autre transducteur, l'obstacle étant disposé entre les transducteurs pour éviter un trajet direct entre ceux-ci

Les moyens d'atténuation des ondes ultrasonores parasites sont réalisés sous la forme d'un matériau 240 absorbant lesdites ondes qui est agencé dans la chambre de mesure 228 autour du conduit 234 de manière à ménager à la périphérie de celui-ci un espace 241 (Fig.20) dans lequel s'écoule le gaz après avoir traversé la fenêtre 226.

Dans cet espace 241 le gaz s'écoule le long du conduit 234 jusqu'à l'extrémité 234a où il effectue un demi-tour pour s'engouffrer à l'intérieur dudit conduit avant de ressortir dans la chambre de mesure 230 par l'extrémité 234b et d'être évacué par l'ouverture 220.

Comme représenté sur la figure 20, le matériau absorbant 240 est en contact avec les parois internes de la chambre 228 sur une portion de la longueur pénétrante du conduit de mesure. L'espace libre autour du conduit à proximité directe de la cloison 232 est laissé libre à l'écoulement de gaz.

Le matériau absorbant est également disposé autour de l'extrémité amont 234a du conduit de mesure afin de s'assurer que l'écoulement qui pénètre dans le conduit ne véhicule pas ou très peu d'ondes ultrasonores parasites générées extérieurement au compteur.

Le matériau absorbant peut épouser la forme des parois internes de la chambre 228 ou prendre d'autres formes.

La longueur sur laquelle est aménagée le matériau absorbant est suffisamment importante pour s'assurer que les ondes ultrasonores parasites vont être soumises à des réflexions multiples ce qui va favoriser considérablement l'atténuation de ces ondes. Pour avoir une longueur suffisamment importante, il est possible de disposer le conduit de mesure 234 de façon dissymétrique par rapport à la cloison 232 afin que la longueur pénétrante dudit conduit dans la chambre 228 soit supérieure à celle de la chambre 230, comme représenté sur la figure 19.

Le matériau absorbant utilisé peut être le même que celui décrit précédemment pour les autres modes de réalisation.

A titre de variante, la figure 21 montre que le matériau absorbant 242 peut venir en contact tangentiel avec la surface externe du conduit de mesure 234 de façon à ménager de part et d'autre de celui-ci deux espaces 243, 244 réalisés sous la forme de canaux longitudinaux. L'efficacité d'atténuation est accrue par rapport à la configuration de la figure 20 car l'épaisseur du matériau est plus importante dans la configuration de la figure 21 et, l'écoulement étant séparé en deux parties, il est davantage en contact avec le matériau absorbant.

Avec la configuration de la figure 21, il est par exemple possible d'atténuer d'environ 30dB par décade le niveau de bruit présent dans l'écoulement avec une épaisseur de matériau absorbant de 5mm, une longueur de matériau absorbant de 80mm et des dimensions en section transversale (plan de la figure 21) de 56 x 42mm.

La figure 22 illustre une autre variante de réalisation dans laquelle le matériau absorbant 246 vient en contact avec une plus grande surface du conduit de mesure 234 que dans la configuration de la figure 21 pour former deux canaux logitudinaux 247, 248. Un telle disposition du matériau absorbant est avantageuse étant donné que l'écoulement de gaz est davantage en contact avec le matériau absorbant que dans la configuration de la figure 21.

En outre, le conduit de mesure 234 se trouve ainsi maintenu entre deux portions de matériau absorbant ce qui permet notamment d'empêcher ledit conduit de mesure de vibrer.

Par ailleurs, une telle disposition du matériau absorbant permet de faciliter l'installation du conduit de mesure 234 dans le bloc de mesure 224 puisque l'emplacement dudit conduit est préformé dans le matériau absorbant 246.

Dans la variante illustrée par la figure 23, le matériau absorbant 250 entoure complètement le conduit de mesure 234 de manière à former deux canaux longitudinaux 251 et 252 qui ne soient pas en contact avec ledit conduit et qui soient donc, eux aussi, entourés de toutes parts par le matériau absorbant.

Ainsi, l'atténuation est encore plus efficace que dans la configuration de la figure 22.

Les configurations du matériau absorbant représentées aux figures 20 à 23 peuvent également être disposées dans la chambre de mesure 230 en aval du trajet de mesure si la source de bruit se situe en aval du compteur.

Dans ce cas, il faut que la longeur pénétrante du conduit de mesure dans la chambre 230 soit supérieure à celle de la chambre 228.

Au cas où l'on a besoin de disposer le matériau absorbant en amont et en aval du trajet de mesure il est préférable que le conduit ne soit pas disposé de manière trop dissymétrique par rapport à la cloison 232.

La forme des canaux 247, 248 et 251, 252 représentés sur les figures 22 et 23 peut varier et par exemple présenter des arrondis pour améliorer le passage de l'écoulement du gaz.

## Revendications

1. Compteur de fluide à ultrasons (10 ; 110 ; 210) comprenant :
- des ouvertures (18, 20 ; 118, 120 ; 218, 220) d'amenée et d'évacuation de fluide,
- au moins deux transducteurs ultrasonores (12, 14 ; 236, 238) définissant entre eux un trajet de mesure ultrasonore et émettant et recevant des ondes ultrasonores dans le fluide le long dudit trajet de mesure ultrasonore suivant au moins une fréquence ultrasonore,
- des moyens d'atténuation (30, 36, 46, 52, 60, 70, 80, 90, 95, 180 ; 240, 242, 246, 250) des ondes ultrasonores parasites générées extérieurement audit compteur de fluide et transmises par le fluide suivant la (ou les) fréquence(s) ultrasonore(s), lesdits moyens étant disposés entre la source extérieure et le trajet de mesure ultrasonore et étant réalisés au moins partiellement dans un matériau absorbant à la (ou aux) fréquence(s) ultrasonore(s) utilisée(s) dans le compteur, **caractérisé en ce que** ledit compteur comprend entre l'une des ouvertures (18, 20 ; 118, 120 ; 218, 220) et le trajet de mesure ultrasonore une chambre (22; 122; 228 ; 230) dans laquelle sont disposés les moyens d'atténuation des ondes ultrasonores parasites, lesdits moyens d'atténuation des ondes ultrasonores parasites comprenant une entrée (18 ; 118) et au moins une sortie (32 ; 123 ; 125) pour l'écoulement de fluide et faisant office d'écran entre l'entrée et la sortie desdits moyens d'atténuation pour les ondes ultrasonores parasites.

2. Compteur selon la revendication 1, dans lequel les moyens d'atténuation des ondes ultrasonores parasites sont agencés dans la chambre (22; 122; 228 ; 230) de manière à offrir aux dites ondes ultrasonores parasites de multiples réflexions sur le matériau absorbant les ondes ultrasonores.

3. Compteur selon les revendications 1 à 2, dans lequel les moyens d'atténuation possèdent des parois réalisées dans un matériau absorbant les ondes ultrasonores.

4. Compteur selon les revendications 1 et 3, dans lequel les parois (38 ; 48 ; 50 ; 54 ; 56 ; 62) des moyens d'atténuation sont déformées vers l'intérieur desdits moyens de manière à faire office d'écran entre l'entrée et la sortie desdits moyens pour les ondes ultrasonores parasites.

5. Compteur selon la revendication 1 ou 4, dans lequel les moyens d'atténuation des ondes ultrasonores parasites comprennent au moins un obstacle (72, 74, 78, 82, 92, 96, 172, 188) disposé entre l'entrée et la sortie de manière à faire office d'écran pour les ondes ultrasonores parasites.

6. Compteur selon la revendication 5, dans lequel l'obstacle est réalisé en matériau absorbant les ondes ultrasonores.

7. Compteur selon la revendication 5 ou 6, dans lequel l'obstacle (72, 74, 82, 96, 172, 188) est placé en face de l'entrée (18, 118).

8. Compteur selon l'une des revendications 5 à 7, dans lequel l'obstacle sépare l'écoulement de fluide issu de l'entrée en au moins deux flux.

9. Compteur selon la revendication 8, dans lequel l'obstacle (82, 188) possède en vis-à-vis de l'entrée (18, 182) une forme profilée (82a, 188a) s'étendant vers ladite entrée afin de favoriser la séparation de l'écoulement.

10. Compteur selon l'une des revendications 5 à 9, dans lequel l'obstacle (82, 188) possède en vis-à-vis de la sortie (32, 184) une forme profilée (82b, 188b) s'étendant vers ladite sortie.

11. Compteur selon l'une des revendications 5 à 10, dans lequel l'obstacle a une forme permettant à l'écoulement de circuler tout autour dudit obstacle.

12. Compteur selon l'une des revendications 5 à 11, dans lequel l'obstacle comprend au moins une partie (92) réfléchissant les ondes ultrasonores.

13. Compteur selon la revendication 1, dans lequel les moyens d'atténuation des ondes ultrasonores parasites sont disposés en amont du trajet de mesure ultrasonore.

14. Compteur selon la revendication 1, dans lequel les moyens d'atténuation des ondes ultrasonores parasites sont disposés en aval du trajet de mesure ultrasonore.

15. Compteur selon la revendication 1 ou 2, comprenant un conduit de mesure (234) axial dans lequel le fluide s'écoule d'amont en aval et dont une partie munie d'une extrémité pénètre dans une chambre dite de mesure (228 ; 230) sur une certaine longueur, le matériau (240 ; 242 ; 246 ; 250) absorbant les ondes ultrasonores parasites étant agencé dans ladite chambre de mesure sur au moins une portion de la longueur pénétrante du conduit de mesure (234) qui inclut ladite l'extrémité et de manière à ménager, à l'extérieur dudit conduit de mesure, au moins un espace (241 ; 243, 244 ; 247, 248 ; 251, 252) dans lequel le fluide s'écoule parallèlement à l'axe de ce conduit en sens inverse de l'écoulement du fluide dans ledit conduit.

16. Compteur selon la revendication 15, dans lequel un espace périphérique (241) est ménagé autour du conduit de mesure (234), le matériau (242) absorbant les ondes ultrasonores parasites étant en contact avec les parois de la chambre de mesure (228 ; 230).

17. Compteur selon la revendication 15, dans lequel le matériau (242 ; 246 ; 250) absorbant les ondes ultrasonores est en contact, d'une part, avec les parois de la chambre de mesure (228 ; 230) et, d'autre part, avec le conduit de mesure (234) de manière à ménager deux espaces (243, 244 ; 247, 248 ; 251, 252) sous la forme de canaux situés de part et d'autre dudit conduit de mesure.

18. Compteur selon la revendication 17, dans lequel le matériau (250) absorbant les ondes ultrasonores entoure complètement le conduit de mesure de manière à ce que les canaux (251, 252) ne soient pas en contact avec ledit conduit de mesure (234).

## Claims

1. Ultrasonic fluid counter (10 ; 110 ; 210) including :
- fluid intake and evacuation openings (18, 20 ; 118, 120 ; 218, 220)
- at least two ultrasonic transducers (12, 14 ; 236, 238) collectively defining an ultrasonic measuring path and transmitting and receiving ultrasonic waves in the fluid along said ultrasonic measuring path according to at least one ultrasonic frequency,
- means (30, 36, 46, 52, 60, 70, 80, 90, 95, 180 : 240, 242, 246, 250) for attenuating the parasitic ultrasonic waves generated outside said fluid counter and transmitted by the fluid according to the ultrasonic frequency(cies), said means being disposed between the external source and the ultrasonic measuring path and being made, at least partly, of a material absorbent to the ultrasonic frequency (cies) used in the counter, wherein said counter includes between one of the openings (18, 20 ; 118, 120 ; 218, 220) and the ultrasonic measuring path a chamber (22 ; 122 ; 228 ; 230) in which the means for attenuating the parasitic ultrasonic waves are disposed, said means for attenuating the parasitic ultrasonic waves include an inlet (18 ; 118) and at least one outlet (32 ; 123 ; 125) for the fluid flow and serve as a screen between the inlet and outlet of said means for the parasitic ultrasonic waves.

2. Counter according to claim 1, wherein the means for attenuating the parasitic ultrasonic waves are fitted in the chamber (22; 122; 228; 230) so as to offer said parasitic ultrasonic waves with multiple reflections onto the material absorbing the ultrasonic waves.

3. Counter according to claims 1 to 2, wherein the attenuation means have walls made of a material absorbing the ultrasonic waves.

4. Counter according to claims 1 and 3, wherein the walls (38 ; 48 ; 50 ; 54; 56 ; 62) of the attenuation means are deformed towards the inside of said means so as to serve as a screen between the inlet and outlet of said means for the parasitic ultrasonic waves.

5. Counter according to claim 1 or 4, wherein the means for attenuating the parasitic ultrasonic waves include at least one obstacle (72, 74, 78, 82, 96, 172, 188) disposed between the inlet and outlet so as to serve as a screen for the parasitic ultrasonic waves.

6. Counter according to claim 5, wherein the obstacle is made of a material absorbing the ultrasonic waves.

7. Counter according to claim 5 or 6, wherein the obstacle (72, 74, 82, 96, 172, 188) is placed opposite the inlet (18, 118).

8. Counter according to any one of claims 5 to 7, wherein the obstacle separates the fluid flow derived from the inlet into at least two flows.

9. Counter according to claim 8, wherein the obstacle (82, 188) has opposite the inlet (18, 182) a profiled form (82a, 188a extending towards said inlet so as to favour separation of the flow.

10. Counter according to any one of claims 5 to 9, wherein the obstacle (82, 188) has opposite the outlet (32, 184) a profiled form (82b, 188b) extending towards said outlet.

11. Counter according to any one of claims 5 to 10. wherein the shape of the obstacle enables the flow to circulate around said obstacle.

12. Counter according to any one of claims 5 to 11, wherein the obstacle includes art least one portion (92) reflecting the ultrasonic waves

13. Counter according to claim 1, wherein the means for attenuating the parasitic ultrasonic waves are disposed upstream of the ultrasonic measuring path.

14. Counter according to claim 1, wherein the means for attenuating the parasitic ultrasonic waves are disposed downstream of the ultrasonic measuring path.

15. Counter according to claim 1 or 2 and including an axial measuring pipe (234) in which the fluid flows from upstream to downstream and having a portion provided with one extremity penetrating into a measuring chamber (228 ; 230) over a certain length, the material (240 ; 242 ; 246 ; 250) absorbing the parasitic ultrasonic waves being fitted in said measuring chamber over at least one portion of the penetrating length of the measuring pipe (234) which includes said extremity and so as to provide outside said measuring pipe at least one space (241 ; 243, 244 ; 247, 248 ; 251, 252) in which the fluid flows parallel to the axis of this pipe in a direction opposing the flow of the fluid in said pipe.

16. Counter according to claim 15, wherein a peripheral space (241) is provided around the measuring pipe (234), the material (242) absorbing the parasitic ultrasonic waves being in contact with the walls of the measuring chamber (226 ; 230).

17. Counter according to claim 15, wherein the material (242 ; 246 ; 250) absorbing the ultrasonic waves is in contact firstly with the walls of the measuring chamber (228 ; 230) and secondly with the measuring pipe (234) so as to provide two spaces (243, 244 ; 247, 248 ; 251, 252) in the form of channels situated on both sides of said measuring pipe.

18. Counter according to claim 17, wherein the material (250) absorbing the ultrasonic waves fully surrounds the measuring pipe so that the channels (251, 252) are not in contact with said measuring pipe (234).

## Patentansprüche

1. Ultraschall-Strömungsmesser (10; 110; 210), der umfaßt:
- Öffnungen (18, 20; 118, 120; 218, 220) zum Zuführen und Abführen von Fluid,
- wenigstens zwei Ultraschallwandler (12, 14; 236, 238), die zwischen sich einen Ultraschall-Meßweg definieren und längs des Ultraschall-Meßweges in das Fluid Ultraschallwellen mit wenigstens einer Ultraschallfrequenz aussenden bzw. hiervon empfangen,
- Mittel (30, 36, 46, 52, 60, 70, 80, 90, 95, 180; 240, 242, 246, 250) zur Dämpfung parasitärer Ultraschallwellen, die außerhalb des Strömungsmessers erzeugt und durch das Fluid mit der (oder den) Ultraschallfrequenz(en) übertragen werden, wobei die Mittel zwischen der äußeren Quelle und dem Ultraschall-Meßweg angeordnet sind und wenigstens teilweise aus einem Werkstoff hergestellt sind, der die in dem Messer verwendete(n) Ultraschallfrequenz(en) absorbiert, **dadurch gekennzeichnet, daß** der Messer zwischen einer der Öffnungen (18, 20; 118, 120; 218, 220) und dem Ultraschall-Meßweg eine Kammer (22; 122; 228; 230) aufweist, in der die Dämpfungsmittel für die parasitären Ultraschallwellen angeordnet sind, wobei die Dämpfüngsmittel für die parasitären Ultraschallwellen einen Eingang (18; 118) und wenigstens einen Ausgang (32; 123; 125) für die Fluidströmung aufweisen und als Schirm zwischen dem Eingang und dem Ausgang der Dämpfüngsmittel für die parasitären Ultraschallwellen dienen.

2. Messer nach Anspruch 1, in dem die Dämpfungsmittel für die parasitären Ultraschallwellen in der Kammer (22; 122; 228; 230) in der Weise angeordnet sind, daß sie Mehrfachreflexionen der parasitären Ultraschallwellen an dem die Ultraschallwellen absorbierenden Werkstoff hervorrufen.

3. Messer nach den Ansprüche 1 bis 2, in dem die Dämpfungsmittel Wände besitzen, die aus einem die Ultraschallwellen absorbierenden Werkstoff hergestellt sind.

4. Messer nach den Ansprüche 1 und 3, in dem die Wände (38; 48; 50; 54; 56; 62) der Dämpfungsmittel in den Innenraum der Mittel in der Weise verformt sind, daß sie als Schirm zwischen dem Eingang und dem Ausgang der Mittel für die parasitären Ultraschallwellen dienen.

5. Messer nach Anspruch 1 oder 4, in dem die Dämpfungsmittel für die parasitären Ultraschallwellen wenigstens ein Hindernis (72, 74, 78, 82, 92, 96, 172, 188) umfassen, das zwischen dem Eingang und dem Ausgang in der Weise angeordnet ist, daß es als Schirm für die parasitären Ultraschallwellen dient.

6. Messer nach Anspruch 5, in dem das Hindernis aus einem Werkstoff hergestellt ist, der die Ultraschallwellen absorbiert.

7. Messer nach Anspruch 5 oder 6, in dem das Hindernis (72, 74, 82, 96, 172, 188) gegenüber dem Eingang (18, 118) angeordnet ist.

8. Messer nach einem der Ansprüche 5 bis 7, in dem das Hindernis die Fluidströmung, die vom Eingang ankommt, in wenigstens zwei Flüsse unterteilt.

9. Messer nach Anspruch 8, in dem das Hindernis (82, 188) gegenüber dem Eingang (18, 182) eine Profilform (82a, 188a) besitzt, die sich zum Eingang erstreckt, um die Trennung der Strömung zu begünstigen.

10. Messer nach einem der Ansprüche 5 bis 9, in dem das Hindernis (82, 188) gegenüber dem Ausgang (32, 184) eine Profilform (82b, 188b) besitzt, die sich zum Ausgang erstreckt.

11. Messer nach einem der Ansprüche 5 bis 10, in dem das Hindernis eine Form besitzt, die der Strömung ermöglicht, um das gesamte Hindernis zu zirkulieren.

12. Messer nach einem der Ansprüche 5 bis 11, in dem das Hindernis wenigstens einen Abschnitt (92) aufweist, der die Ultraschallwellen reflektiert.

13. Messer nach Anspruch 1, in dem die Dämpfungsmittel für die parasitären Ultraschallwellen stromaufseitig vom Ultraschall-Meßweg angeordnet sind.

14. Messer nach Anspruch 1, in dem die Dämpfungsmittel für die parasitären Ultraschallwellen abströmseitig vom Ultraschall-Meßweg angeordnet sind.

15. Messer nach Anspruch 1 oder 2, der eine axiale Meßleitung (234) aufweist, in der das Fluid von der Einlaßseite zur Auslaßseite strömt und wovon ein mit einem Ende versehenes Teil mit einer bestimmten Länge in eine sogenannte Meßkammer (228; 230) eindringt, wobei der die parasitären Ultraschallwellen absorbierende Werkstoff (240; 242; 246; 250) in der Meßkammer wenigstens auf einem Abschnitt der Eindringlänge der Meßleitung (234) angeordnet ist, der das Ende enthält, derart, daß außerhalb der Meßleitung wenigstens ein Raum (241; 243, 244; 247, 248; 251, 252) vorhanden ist, in den das Fluid parallel zur Achse dieser Leitung und entgegengesetzt zur Fluidströmung in der Leitung strömt.

16. Messer nach Anspruch 15, in dem ein Umfangsraum (241) um die Meßleitung (234) ausgebildet ist, wobei der die parasitären Ultraschallwellen absorbierende Werkstoff (242) mit den Wänden der Meßkammer (228; 230) in Kontakt ist.

17. Messer nach Anspruch 15, in dem der die Ultraschallwellen absorbierende Werkstoff (242; 246; 250) einerseits mit den Wänden der Meßkammer (228; 230) und andererseits mit der Meßleitung (234) in Kontakt ist, derart, daß zwei Räume (243, 244; 247, 248; 251, 252) in Form von Kanälen ausgebildet sind, die sich beiderseits der Meßleitung befinden.

18. Messer nach Anspruch 17, in dem der die Ultraschallwellen absorbierende Werkstoff (250) die Meßleitung vollständig umgibt, derart, daß die Kanäle (251, 252) mit der Meßleitung (234) nicht in Kontakt sind.
